# EUROPÄISCHE PATENTSCHRIFT

(11) **EP 2 558 350 B1**
(45) Veröffentlichungstag und Bekanntmachung des Hinweises auf die Patenterteilung: **14.05.2014**
(21) Anmeldenummer: 12709557.8
(22) Anmeldetag: 09.03.2012
(51) Int. Cl.: B62D 25/06, B62D 25/07, B62D 29/00

(54) **Dachanordnung eines Fahrzeuges**
Roof arrangement for a vehicle
Ensemble de toit pour véhicule

(30) Priorität: 14.03.2011 DE 102011013818
(43) Veröffentlichungstag der Anmeldung: 20.02.2013
(73) Patentinhaber: Webasto SE, 82131 Stockdorf (DE)
(72) Erfinder: SCHRÖFERL, Thomas, 82069 Hohenschäftlarn (DE)
(74) Vertreter: Epping - Hermann - Fischer
(86) Internationale Anmeldenummer: PCT/EP2012/054136
(87) Internationale Veröffentlichungsnummer: WO 2012/123368

(56) Entgegenhaltungen:
- EP-A2- 1 759 960
- WO-A1-01/94141
- DE-A1-102004 007 988
- DE-A1-102009 004 479

## Beschreibung

Die Erfindung betrifft eine Dachanordnung mit einem Deckel zum Verschließen einer Öffnung eines Fahrzeugdachs und einem Befestigungsblech, das im Randbereich des Deckels mit diesem verbunden ist, wobei der Deckel gegenüber dem Fahrzeugdach höheneinstellbar ist.

Eine solche Dachanordnung ist aus der DE 102 009 004 479 A1 bekannt.

Dachanordnungen dieser Art werden oftmals mit einem Glasfestelement als Deckel realisiert. Dabei wird die Öffnung des Fahrzeugdachs von dem Glasfestelement ausgefüllt. Die Höhe des Glasfestelements muss so justiert werden, dass die Oberfläche genau mit der umgebenden Oberfläche des Fahrzeugdachs fluchtet. Zwischen dem Deckel und dem Fahrzeugdach befindet sich ein Spalt, der zwar von einer Dichtung verschlossen ist, der dadurch jedoch nie vollständig dicht wird. Aus diesem Grund ist üblicherweise im Bereich unterhalb des Spalts zwischen Deckel und Fahrzeugdach eine Wasserrinne vorgesehen, in der eindringendes Wasser aufgefangen wird. Durch einen Ablauf wird dem aufgefangenen Wasser ermöglicht, aus der Wasserrinne abzulaufen.

Aufgabe der Erfindung ist es, die Befestigung des Deckels an dem Fahrzeugdach besonders kompakt auszugestalten und dabei das Eindringen von Wasser in den Fahrzeuginnenraum zuverlässig zu verhindern.

Diese Aufgabe wird erfindungsgemäß durch eine Dachanordnung der eingangs genannten Art gelöst, die dadurch gekennzeichnet ist, dass an das Befestigungsblech eine Dichtlippe angeschäumt ist zur zumindest abschnittsweisen Abdichtung des Befestigungsblechs gegenüber dem Fahrzeugdach.

Die erfindungsgemäße Dichtlippe kann mit einer sehr geringen Breite realisiert werden, sodass nur wenig Bauraum für die Abdichtung des Befestigungsblechs gegenüber dem Fahrzeugdach benötigt wird. In einer besonders günstigen Ausgestaltung der erfindungsgemäßen Dachanordnung liegt die Dichtlippe in einem Abschnitt nahe eines Auslaufs an dem Fahrzeugdach an. Dadurch wird ermöglicht, dass die Wasserrinne in diesem Bereich, in dem sich leicht Wasser anstauen kann, eine gute Abdichtung gegenüber einem Fahrzeuginnenraum aufweist. In weiter vom Auslauf entfernt liegenden Bereichen ist dagegen eine derartige Abdichtung nicht zwingend erforderlich. Dort bildet die Dichtlippe eine Seitenwandung der Wasserrinne.

Ein besonderer Vorteil der an das Befestigungsblech angeschäumten Dichtlippe besteht darin, dass es keine undichten Bereiche gibt wie bei einer gesteckten oder geklebten Dichtung.

In einer besonders vorteilhaften Ausführung der Erfindung besteht die Dichtlippe aus einem Polyurethan, bei dem es sich um das gleiche Material handeln kann wie bei dem zur Umschäumung des Randbereichs des Deckels verwendeten Material. Somit kann die gesamte Umschäumung des Deckelrandes und des Befestigungsblechs sowie die Dichtlippe in einem einzigen Fertigungsschritt hergestellt werden. Die Begriffe "umspritzen" und "umschäumen" werden im Zusammenhang mit der beschriebenen Erfindung synonym verwendet, da sie lediglich je nach verwendetem Kunststoff unterschiedlich gebraucht werden. Die Erfindung kann jedoch mit unterschiedlichen Kunststoffen eingesetzt werden, so dass beide Begriffe zur Anwendung kommen können.

In einer vorteilhaften Weiterbildung der Erfindung weist die Dichtlippe einen ersten Bereich auf, der an das Befestigungsblech angeschäumt ist, und einen sich anschließenden zweiten Bereich, der gegenüber dem ersten Bereich abgewinkelt ist und bevorzugt eine kleinere Dicke aufweist als der erste Bereich. Dadurch legt sich die Dichtlippe besonders gut an das Fahrzeugdach an und ermöglicht so eine besonders gute Abdichtung in diesem Bereich.

Weitere vorteilhafte Ausgestaltungen der Erfindung sind in den Unteransprüchen angegeben.

Die Erfindung wird nachfolgend anhand von Ausführungsbeispielen erläutert. Es zeigt:
Figur 1 einen Schnitt durch eine erfindungsgemäße Dachanordnung in der Nähe eines Ablaufs,
Figur 2 einen Schnitt durch eine erfindungsgemäße Dachanordnung in einem Bereich beabstandet von dem Auslauf und
Figur 3 ein zweites Ausführungsbeispiel einer erfindungsgemäßen Dachanordnung.

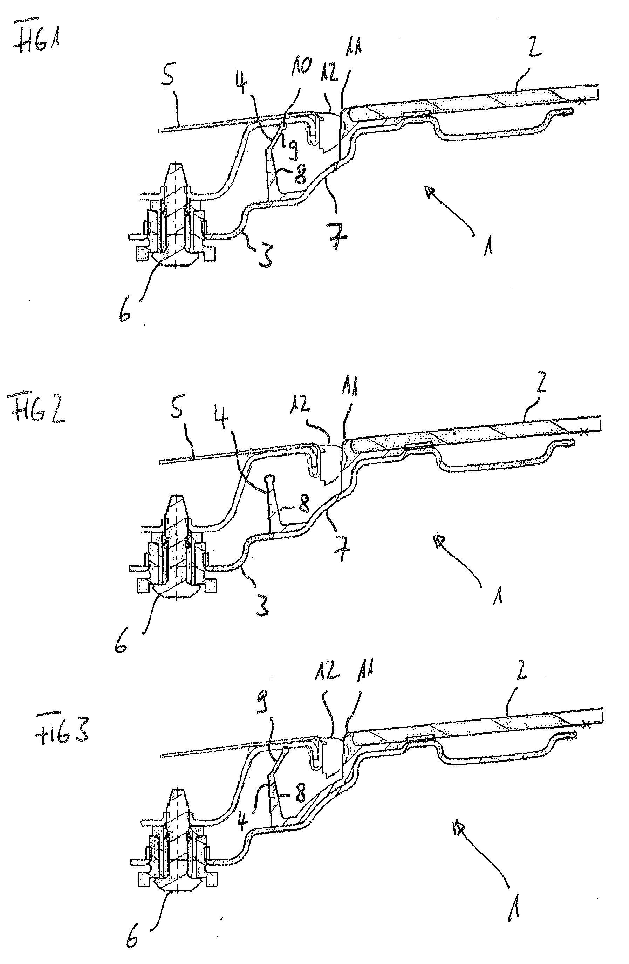

Die Figur 1 zeigt eine erfindungsgemäße Dachanordnung in einem Querschnitt, wobei nur der für die Erfindung relevante Übergangsbereich vom Deckel 2 zum Fahrzeugdach 5 gezeigt ist. An einem Glasdeckel 2 ist ein Befestigungsblech 3 befestigt, wobei die Verbindung zwischen Befestigungsblech 3 und Deckel 2 durch eine Umschäumung 11 des Randbereichs bewirkt wird. Die Umschäumung 11 wirkt dabei wie ein Kleber, der für eine zuverlässige und wasserdichte Verbindung dieser beiden Komponenten sorgt.

Das Befestigungsblech 3 ist wiederum mit dem Fahrzeugdach 5 verbunden, wobei die Verbindung über eine Vorrichtung 6 zur Höheneinstellung erfolgt. Dazu ist eine Schraube vorgesehen, die durch eine Ausnehmung in dem Befestigungsblech 3 geführt ist und dann mit einem Rahmen des Fahrzeugdachs 5 verschraubt ist. Durch Betätigen der Schraube kann die Höhe des Glasdeckels 2 gegenüber dem Fahrzeugdach 5 sehr genau justiert werden.

Der Spalt zwischen Glasdeckel 2 und Fahrzeugdach 5 ist durch eine Dichtung 12 verschlossen. Durch die Dichtung 12 wird insbesondere verhindert, dass Schmutz durch den Spalt ins Innere eindringen kann. Die Dichtung ist allerdings nicht dazu geeignet, den Deckel 2 vollständig wasserdicht gegenüber dem Fahrzeugdach 5 abzudichten.

Um eindringendes Wasser aufzufangen, ist unterhalb des Spalts zwischen Deckel 2 und Fahrzeugdach 5 eine Wasserrinne ausgebildet. Beim Ausführungsbeispiel von Figur 1 wird die Rinne durch ein Zusammenwirken des Befestigungsblechs 3 mit einer Dichtlippe 4 gebildet, die an das Befestigungsblech 3 angeschäumt ist. Beim Anschäumen oder auch Anspritzen wird eine Spritzgussform auf das Befestigungsblech 3 aufgesetzt, wobei die Spritzgussform Kavitäten aufweist, die später von weichem Kunststoffmaterial ausgefüllt werden. Nachdem das Kunststoffmaterial fest geworden ist die Spritzgussform entfernt wurde, bleibt im Beispiel von Figur 1 die Dichtlippe 4 und auch die Umschäumung 11 stehen.

Allgemein sind es nur relativ geringe Wassermengen, die durch den Spalt in die Wasserrinne eindringen und von dort abgeführt werden müssen. Das eingedrungene Wasser sammelt sich jedoch im Bereich eines Ablaufs, sodass dieses sogenannte Schwallwasser die Wasserrinne verhältnismäßig hoch auffüllen kann. Daher ist in diesem Bereich, der sich ausgehend von dem Ablauf über 200 bis 300 mm erstrecken kann, die Dichtlippe 4 bis an das Fahrzeugdach 5 herangeführt. Somit bildet die Wasserrinne in diesem Bereich einen geschlossenen Kanal.

Um besonders gute Dichteigenschaften zu erreichen, besteht die Dichtlippe 4 aus einem ersten Bereich 8 und einem zweiten Bereich 9. Der erste Bereich 8 ist an das Befestigungsblech 3 angeschäumt und setzt sich in dem zweiten Bereich 9 fort. Der zweite Bereich 9 ist gegenüber dem ersten Bereich 8 abgewinkelt, vorzugsweise in einem Bereich von 10° bis 40° gegenüber einer geradlinigen Fortsetzung des ersten Bereichs. Außerdem ist die Materialdicke des zweiten Bereichs 9 geringer als die Materialdicke im ersten Bereich 8. Dadurch wird erreicht, dass für den ersten und zweiten Bereich der Dichtlippe 4 das gleiche Material verwendet werden kann, obwohl in zweiten Bereich eine höhere Elastizität erforderlich ist. Am freien Endbereich des zweiten Bereichs 9 ist eine schnurförmige Aufdickung 10 vorgesehen. Dadurch kann der zweite Bereich 9 verhältnismäßig dünn ausgeführt werden, ohne dass es zu einer Ausfransung kommt.

In einem Bereich, der in diesem Ausführungsbeispiel mehr als 200 - 300 mm von dem Ablauf entfernt ist, ist die Dichtlippe 4 kürzer ausgeführt, wie in Figur 2 dargestellt ist. Der zweite Bereich 9 der Dichtlippe entfällt in diesem Bereich nahezu und es ist nur die schnurförmige Aufdickung geblieben, die das freie Ende der Dichtlippe abschließt. Dadurch besteht zwischen der Dichtlippe 4 und dem Fahrzeugdach ein Spalt, sodass es theoretisch zu einem Überlaufen der durch das Befestigungsblech 3 und die Dichtlippe 4 gebildeten Wasserrinne kommen und Wasser in den Innenraum des Fahrzeugs gelangen kann. Dies ist in der Praxis jedoch unproblematisch, da die auftretenden Wassermengen sofort dem Ablauf zugeführt werden. Darüber hinaus ist die Überlappung von Befestigungsblech 3 und Fahrzeugdach 5 verhältnismäßig groß, sodass Wasser nicht direkt von dem Spalt zwischen Deckel 2 und Fahrzeugdach 5 über die Dichtlippe 4 in das Fahrzeuginnere tropfen oder spritzen kann. Eine Abwicklung des Fahrzeugdachs 5 im Randbereich zum Deckel 2 verhindert zusätzlich, dass Wasser die Dichtlippe 4, welche in diesem Bereich lediglich die Wandung der Wasserrinne bildet, überwinden kann.

Die Maßnahme, in dem von Ablauf entfernten Bereich die Dichtlippe 4 nicht bis an das Fahrzeugdach 5 heranzuführen, hat mehrere Vorteile. Ein Hauptvorteil besteht darin, dass der Anpressdruck des Befestigungsblechs 3 gegen das Fahrzeugdach 5 verhältnismäßig gering sein kann. Der Gegendruck wird nur im Bereich des Auslaufs durch den zweiten Bereich 9 der Dichtlippe 4 erzeugt. In den anderen Bereichen des Deckelrandes ist jedoch kein Anpressdruck erforderlich, sodass die Vorrichtung 6 zur Höheneinstellung nur die Gewichtskraft des Deckels und des Befestigungsblechs abfangen muss. Aus diesem Grund kann diese und das Befestigungsblech 3 aus einem verhältnismäßig dünnen und damit leichten und kostengünstigen Material hergestellt werden.

In der Figur 3 ist eine abgewandelte Ausführungsform einer erfindungsgemäßen Dachanordnung gezeigt. Während bei den Figuren 1 und 2 der Bereich zwischen der Dichtlippe 4 und dem Rand des Deckels 2 nicht umschäumt war, ist in Figur 3 eine Teilumschäumung vorgesehen. Auf der Innenseite der Wasserrinne ist die Umschäumung dabei durchgehend von der Dichtlippe 4 bis zur Umschäumung 11 des Deckelrandes ausgeführt.

## Patentansprüche

1. Dachanordnung (1) mit
einem Deckel (2) zum Verschließen einer Öffnung eines Fahrzeugdachs (5) und
einem Befestigungsblech (3), das im Randbereich des Deckels (2) mit diesem verbunden ist,
wobei der Deckel (2) gegenüber dem Fahrzeugdach (5) höheneinstellbar ist,
**dadurch gekennzeichnet, dass**
an das Befestigungsblech (3) eine Dichtlippe (4) angeschäumt ist zur zumindest abschnittsweisen Abdichtung des Befestigungsblechs (3) gegenüber dem Fahrzeugdach (5).

2. Dachanordnung nach Anspruch 1,
**dadurch gekennzeichnet, dass**
die Dichtlippe (4) zwischen und jeweils beabstandet zu einer Vorrichtung (6) zur Höheneinstellung des Deckels (2) und dem Rand des Deckels (2) angeordnet ist.

3. Dachanordnung nach Anspruch 1 oder 2,
**dadurch gekennzeichnet, dass**
sich zwischen der Dichtlippe (4) und dem Rand des Deckels (2) ein nicht umschäumter Bereich (7) des Befestigungsblechs (3) befindet.

4. Dachanordnung nach einem der Ansprüche 1 bis 3,
**dadurch gekennzeichnet, dass**
die Dichtlippe (4) aus einem Polyurethan-Material besteht.

5. Dachanordnung nach einem der Ansprüche 1 bis 4,
**dadurch gekennzeichnet, dass**
die Dichtlippe (4) einen ersten Bereich (8) und einen zweiten Bereich (9) aufweist, wobei der erste Bereich (8) mit dem Befestigungsblech (3) in Verbindung steht und der zweite Bereich (9) gegenüber dem ersten Bereich (8) abgewinkelt ist.

6. Dachanordnung nach Anspruch 5,
**dadurch gekennzeichnet, dass**
die Abwinkelung einen Winkel zwischen 10° und 40° aufweist.

7. Dachanordnung nach einem der Ansprüche 5 oder 6,
**dadurch gekennzeichnet, dass**
der zweite Bereich (9) eine geringere Dicke als der erste Bereich (8) aufweist.

8. Dachanordnung nach einem der Ansprüche 5 bis 7,
**dadurch gekennzeichnet, dass**
der freie Endbereich des zweiten Bereiches (9) eine Aufdickung (10) aufweist.

9. Dachanordnung nach einem der Ansprüche 1 bis 8,
**dadurch gekennzeichnet, dass**
die Breite der Dichtlippe (4) kleiner als 10 mm ist.

10. Dachanordnung nach einem der Ansprüche 1 bis 9,
**dadurch gekennzeichnet, dass**
die Höhe der Dichtlippe kleiner als 20 mm, vorzugsweise kleiner als 15 mm ist.

11. Dachanordnung nach einem der Ansprüche 1 bis 10,
**dadurch gekennzeichnet, dass**
die Dichtlippe (4) in Verbindung mit dem Befestigungsblech (3) oder einer Umspritzung des Befestigungsblechs (3) eine Wasserrinne bildet.

12. Dachanordnung nach einem der Ansprüche 1 bis 11,
**dadurch gekennzeichnet, dass**
die Dichtlippe (4) im Bereich eines Wasserablaufs in Kontakt mit dem Fahrzeugdach (5) oder einem Rahmen des Fahrzeugdachs (5) ist und in einem von dem Wasserablauf beabstandeten Bereich zwischen der Dichtlippe (4) und dem Fahrzeugdach (5) ein Abstand ist.

13. Dachanordnung nach einem der Ansprüche 1 bis 12,
**dadurch gekennzeichnet, dass**
das Fahrzeugdach (5) im Randbereich zu dem Deckel (2) eine abgewinkelte Kante aufweist.

14. Dachanordnung nach einem der Ansprüche 1 bis 13,
**dadurch gekennzeichnet, dass**
zwischen dem Fahrzeugdach (5) und dem Deckel (2) eine Dichtung, insbesondere eine Hohlkammerdichtung, angeordnet ist, die einen Spalt zwischen Fahrzeugdach (5) und Deckel (2) im Bereich der Oberfläche des Deckels (2) und des Fahrzeugdachs (5) verschließt.

15. Dachanordnung nach einem der Ansprüche 1 bis 14,
**dadurch gekennzeichnet, dass**
der Deckel durch ein Glaselement gebildet ist.

## Claims

1. Roof arrangement (1) comprising
a cover (2) for closing an opening in a vehicle roof (5) and a fastening plate (3) connected to the cover (2) in the edge area thereof,
wherein the cover (2) is height-adjustable relative to the vehicle roof (5),
**characterized in that**
a sealing lip (4) is foam-applied to the fastening plate (3) to seal at least some portions of the fastening plate (3) relative to the vehicle roof (5).

2. Roof arrangement according to Claim 1,
**characterized in that**
the sealing lip (4) is arranged between and in both cases spaced apart from a device (6) for height adjustment of the cover (2) and the edge of the cover (2).

3. Roof arrangement according to Claim 1 or 2,
**characterized in that**
an area (7) without foam coating of the fastening plate (3) is located between the sealing lip (4) and the edge of the cover (2).

4. Roof arrangement according to one of Claims 1 to 3,
**characterized in that**
the sealing lip (4) is made of a polyurethane material.

5. Roof arrangement according to one of Claims 1 to 4,
**characterized in that**
the sealing lip (4) exhibits a first area (8) and a second area (9), wherein the first area (8) is connected to the fastening plate (3) and the second area (9) is bent relative to the first area (8).

6. Roof arrangement according to Claim 5,
**characterized in that**
the bend has an angle of between 10° and 40°.

7. Roof arrangement according to one of Claims 5 or 6,
**characterized in that**
the second area (9) exhibits a smaller thickness than the first area (8).

8. Roof arrangement according to one of Claims 5 to 7,
**characterized in that**
the free end area of the second area (9) exhibits a thickening (10).

9. Roof arrangement according to one of Claims 1 to 8,
**characterized in that**
the width of the sealing lip (4) is smaller than 10 mm.

10. Roof arrangement according to one of Claims 1 to 9,
**characterized in that**
the height of the sealing lip is smaller than 20 mm, preferably smaller than 15 mm.

11. Roof arrangement according to one of Claims 1 to 10,
**characterized in that**
the sealing lip (4) forms a gutter in conjunction with the fastening plate (3) or a spray-coating of the fastening plate (3).

12. Roof arrangement according to one of Claims 1 to 11,
**characterized in that**
the sealing lip (4) is in contact with the vehicle roof (5) or a frame of the vehicle roof (5) in the area of a water outlet and there is a gap between the sealing lip (4) and the vehicle roof (5) in an area spaced apart from the water outlet.

13. Roof arrangement according to one of Claims 1 to 12,
**characterized in that**
the vehicle roof (5) exhibits a bent edge in the edge area to the cover (2).

14. Roof arrangement according to one of Claims 1 to 13,
**characterized in that**
a seal, particularly a hollow chamber seal, is arranged between the vehicle roof (5) and the cover (2), said seal closing a gap between the vehicle roof (5) and the cover (2) in the area of the surface of the cover (2) and the vehicle roof (5).

15. Roof arrangement according to one of Claims 1 to 14,
**characterized in that**
the cover is formed by a glass element.

## Revendications

1. Ensemble de toit (1) comprenant
un couvercle (2) pour fermer une ouverture d'un toit du véhicule (5) et
une tôle de fixation (3) qui est connectée dans la région de bord du couvercle (2) à ce dernier,
le couvercle (2) pouvant être réglé en hauteur par rapport au toit du véhicule (5),
**caractérisé en ce**
**qu'**une lèvre d'étanchéité (4) est fixée par moussage sur la tôle de fixation (3) pour l'étanchéité au moins en partie de la tôle de fixation (3) par rapport au toit du véhicule (5).

2. Ensemble de toit selon la revendication 1,
**caractérisé en ce que**
la lèvre d'étanchéité (4) est disposée de manière respectivement espacée entre un dispositif (6) de réglage en hauteur du couvercle (2) et le bord du couvercle (2).

3. Ensemble de toit selon la revendication 1 ou 2,
**caractérisé en ce**
**qu'**une région non moussée (7) de la tôle de fixation (3) est située entre la lèvre d'étanchéité (4) et le bord du couvercle (2).

4. Ensemble de toit selon l'une quelconque des revendications 1 à 3,
**caractérisé en ce que**
la lèvre d'étanchéité (4) se compose d'un matériau à base de polyuréthane.

5. Ensemble de toit selon l'une quelconque des revendications 1 à 4,
**caractérisé en ce que**
la lèvre d'étanchéité (4) présente une première région (8) et une deuxième région (9), la première région (8) étant en liaison avec la tôle de fixation (3) et la deuxième région (9) étant inclinée par rapport à la première région (8).

6. Ensemble de toit selon la revendication 5,
**caractérisé en ce que**
l'inclinaison présente un angle compris entre 10° et 40°.

7. Ensemble de toit selon l'une quelconque des revendications 5 ou 6,
**caractérisé en ce que**
la deuxième région (9) présente une plus faible épaisseur que la première région (8).

8. Ensemble de toit selon l'une quelconque des revendications 5 à 7,
**caractérisé en ce que**
la région d'extrémité libre de la deuxième région (9) présente un épaississement (10).

9. Ensemble de toit selon l'une quelconque des revendications 1 à 8,
**caractérisé en ce que**
la largeur de la lèvre d'étanchéité (4) est inférieure à 10 mm.

10. Ensemble de toit selon l'une quelconque des revendications 1 à 9,
**caractérisé en ce que**
la hauteur de la lèvre d'étanchéité est inférieure à 20 mm, de préférence inférieure à 15 mm.

11. Ensemble de toit selon l'une quelconque des revendications 1 à 10,
**caractérisé en ce que**
la lèvre d'étanchéité (4) forme, en association avec la tôle de fixation (3) ou un surmoulage de la tôle de fixation (3), une rigole d'écoulement d'eau.

12. Ensemble de toit selon l'une quelconque des revendications 1 à 11,
**caractérisé en ce que**
la lèvre d'étanchéité (4), dans la région d'un écoulement d'eau, est en contact avec le toit du véhicule (5) ou un cadre du toit du véhicule (5), et dans une région espacée de l'écoulement d'eau, il existe une distance entre la lèvre d'étanchéité (4) et le toit du véhicule (5).

13. Ensemble de toit selon l'une quelconque des revendications 1 à 12,
**caractérisé en ce que**
le toit du véhicule (5) présente, dans la région de bord vers le couvercle (2), une arête inclinée.

14. Ensemble de toit selon l'une quelconque des revendications 1 à 13,
**caractérisé en ce**
**qu'**un joint d'étanchéité, en particulier un joint d'étanchéité à cavité, est disposé entre le toit du véhicule (5) et le couvercle (2), lequel joint d'étanchéité ferme un interstice entre le toit du véhicule (5) et le couvercle (2) dans la région de la surface du couvercle (2) et du toit du véhicule (5).

15. Ensemble de toit selon l'une quelconque des revendications 1 à 14,
**caractérisé en ce que**
le couvercle est formé par un élément vitré.
